# EUROPEAN PATENT SPECIFICATION

(11) **EP 4 312 211 B1**
(45) Date of publication and mention of the grant of the patent: **11.11.2026**
(21) Application number: 23188534.4
(22) Date of filing: 28.07.2023
(51) Int. Cl.: G10K 11/178

(54) **ACTIVE SOUND ATTENUATION FOR AIRCRAFT ELECTRICAL SYSTEM**
AKTIVE SCHALLDÄMPFUNG FÜR EIN ELEKTRISCHES FLUGZEUGSYSTEM
ATTÉNUATION SONORE ACTIVE POUR SYSTÈME ÉLECTRIQUE D'AÉRONEF

(30) Priority: 29.07.2022 US 202217876833
(43) Date of publication of application: 31.01.2024
(60) Divisional application: 26210064.7
(73) Proprietor: PRATT & WHITNEY CANADA CORP., Longueuil, Québec J4G 1A1 (CA)
(72) Inventor: WANG, Xi, (01BE5) Longueuil, J4G 1A1 (CA); GONZALEZ, Jeremy, (01BE5) Longueuil, J4G 1A1 (CA)
(74) Representative: Dehns

(56) References cited:
- US-A1- 2016 083 073
- US-A1- 2017 154 618
- US-A1- 2017 174 334
- US-A1- 2018 005 643

## Description

### TECHNICAL FIELD

This disclosure relates generally to an aircraft and, more particularly, to sound attenuation for an aircraft.

### BACKGROUND INFORMATION

An aircraft propulsion system generates noise during operation. Various systems and methods are known in the art for passively and actively attenuating such noise. While these known noise attenuation systems and methods have various benefits, there is still room in the art for improvement.

US 2017/154618 A1 discloses active airborne noise abatement for small, purely electric UAVs by predicting overall vehicle noise (motors, propellers, frame) via machine-learning models using GPS, environmental and kinematic data, to clean onboard audio or reduce annoyance. US 2018/005643 A1 discloses modeling and reduction of drone propulsion system noise, US 2016/0083073 A1 discloses vehicle noise control and communication, and US 2017/174334 A1 discloses piezoelectric transducers on propeller blades for sound control.

### SUMMARY

According to an aspect of the present invention, a method is provided for operating an aircraft system as set forth in claim 1.

According to another aspect of the present invention, a system is provided for an aircraft as set forth in claim 12.

Embodiments of the invention are set forth in the dependent claims.

The foregoing features and the operation of the invention will become more apparent in light of the following description and the accompanying drawings.

### BRIEF DESCRIPTION OF THE DRAWINGS

FIG. 1 is a top view illustration of an aircraft schematically depicted with a sound attenuation system.
FIG. 2 is a side view illustration of the aircraft schematically depicted with the sound attenuation system.
FIG. 3 is a schematic illustration of an aircraft system for the aircraft.
FIG. 4 is a schematic illustration of a portion of the aircraft system with an electric machine.
FIG. 5 is a schematic illustration of a portion of the aircraft system with a thermal engine.
FIG. 6 is a schematic illustration of the aircraft system with an alternative transmission arrangement.
FIG. 7 is a flow diagram of a method for operating the aircraft and its aircraft system.
FIG. 8 is a graphical illustration of attenuation sound waves interfering with electrical system sound waves to attenuate the electrical system sound waves.

### DETAILED DESCRIPTION

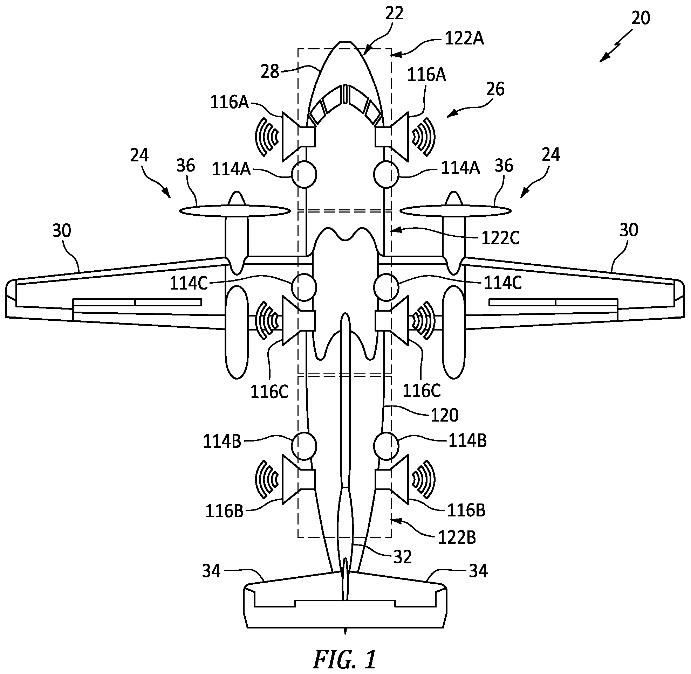

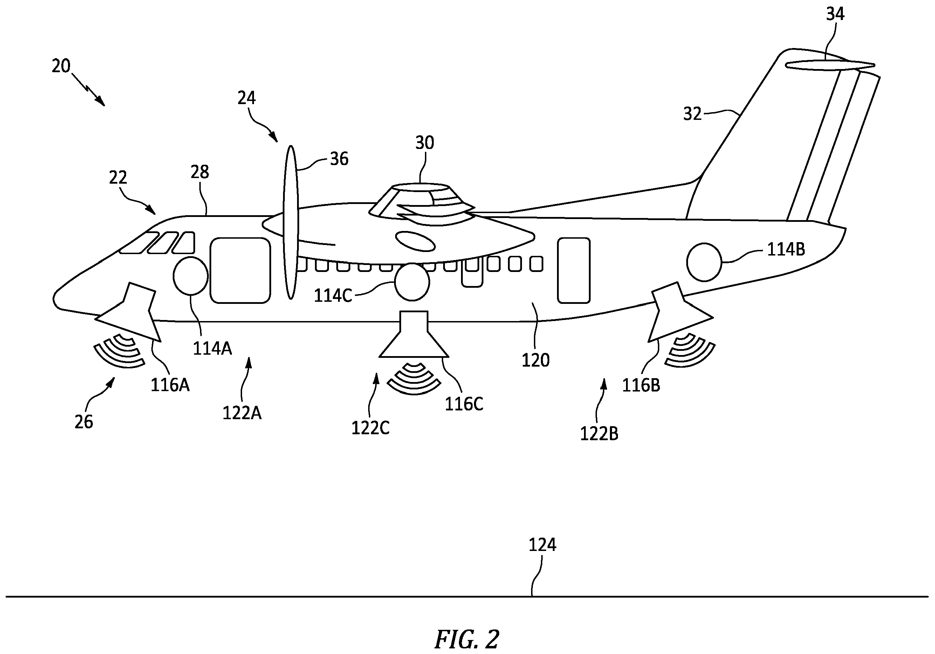

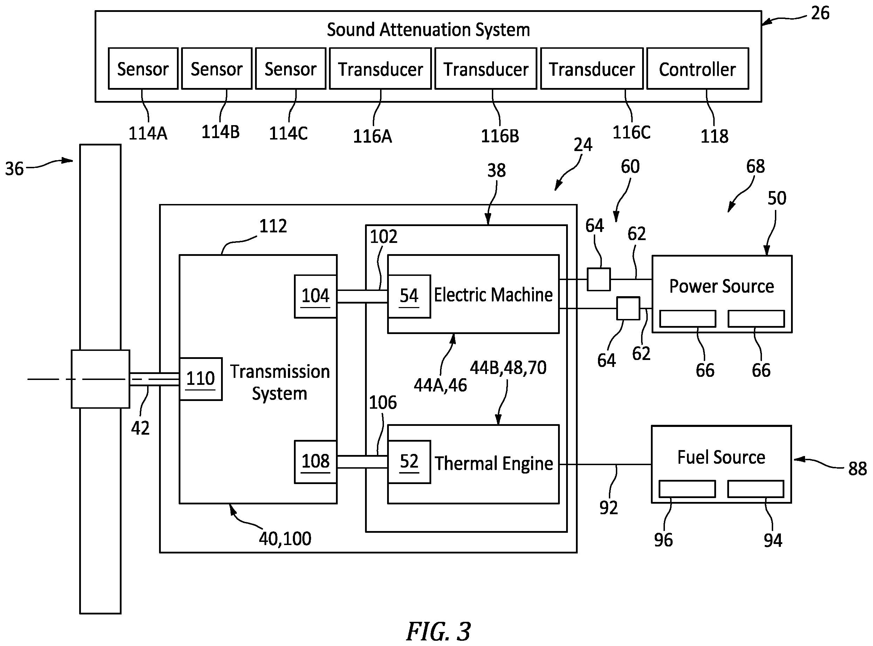

FIGS. 1 and 2 illustrate an aircraft 20 configured as an airplane; e.g., a propeller plane. The aircraft 20 of the present disclosure, however, may alternatively be configured as a helicopter, a drone (e.g., an unmanned aerial vehicle (UAV)) or any other manned or unmanned aerial vehicle. The aircraft 20 of FIGS. 1 and 2 includes an aircraft airframe 22, one or more aircraft propulsion systems 24 and a (e.g., active) sound attenuation system 26 (see also FIG. 3), which may also be referred to as a noise attenuation system. The airframe 22 of FIGS. 1 and 2 includes an aircraft fuselage 28, a plurality of aircraft wings 30, an aircraft vertical stabilizer 32 and one or more aircraft horizontal stabilizers 34.

The aircraft propulsion systems 24 may be arranged on opposing lateral sides of the fuselage 28. Each aircraft propulsion system 24 of FIGS. 1 and 2, for example, is mounted to a respective one of the wings 30. The present disclosure, however, is not limited to such an exemplary arrangement. For example, each of the aircraft propulsion systems 24 may alternatively be mounted to a respective side of the fuselage 28. Referring to FIG. 3, each of the aircraft propulsion systems 24 includes at least (or only) one bladed propulsor rotor 36, a propulsion system powerplant 38 and a transmission system 40 for transmitting mechanical power from the powerplant 38 to the propulsor rotor 36.

The propulsor rotor 36 may be configured as an open rotor or a ducted rotor. Examples of the open rotor include, but are not limited to, a propeller (see also FIGS. 1 and 2) and a helicopter rotor (e.g., a main rotor). A non-limiting example of the ducted rotor is a fan rotor. The propulsor rotor 36 of FIG. 3 is coupled to and rotatable with a propulsor shaft 42 and/or another torque transmission device.

The powerplant 38 includes one or more drive units 44 (e.g., 44A and 44B) configured to drive rotation of the propulsor rotor 36. Examples of these drive units 44 include, but are not limited to, an electric machine (e.g., when operated as an electric motor) and a thermal engine (e.g., an internal combustion (IC) engine). The drive units 44 within the powerplant 38 may have different configurations. In the first aspect of the present invention, one of the drive units 44 is configured as an electric machine whereas another (e.g., the other) one of the drive units 44 is configured as a thermal engine. Alternatively, the drive units 44 within the powerplant 38 may have a common (the same) configuration. Each of the drive units 44, for example, may be configured as an electric machine. Furthermore, while FIG. 3 illustrates the powerplant 38 with two of the drive units 44, the powerplant 38 may alternatively include a single drive unit (e.g., an electric machine) or more than two of the drive units 44. For ease of description, however, the first drive unit 44A is described herein as an electric machine 46 and the second drive unit 44B is described herein as a thermal engine 48.

The electric machine 46 may be selectively configurable as an electric motor and/or an electric generator. For example, during a motor mode of operation, the electric machine 46 may operate as the electric motor to convert electricity received from a power source 50 into mechanical power. This mechanical power may be utilized for various purposes within the propulsion system 24 such as, for example, rotating the propulsor rotor 36 and/or rotating a rotating structure 52 within the thermal engine 48 during thermal engine startup. When operating as the electric motor, according to the second aspect of the present invention, the electric machine 46 is sized to draw at least one megawatt (1MW) of electrical power from the power source 50; e.g., between one megawatt (1MW) and three megawatts (3MW). The present disclosure, however, is not limited to such an exemplary power draw. During a generator mode of operation, the electric machine 46 may operate as the electric generator to convert mechanical power received from, for example, the engine rotating structure 52 and/or the propulsor rotor 36 into electricity. This electricity may be utilized for various purposes within the powerplant 38 such as, for example, electrically powering one or more electric components of the powerplant 38 and/or charging the power source 50. The electricity may also or alternatively be utilized for various purposes outside of the powerplant 38 and/or the propulsion system 24 such as, for example, electrically powering one or more electric components in the aircraft 20. Of course, in other embodiments, the electric machine 46 may alternatively be configured as a dedicated electric motor where the electric machine 46 is not also operable as an electric generator.

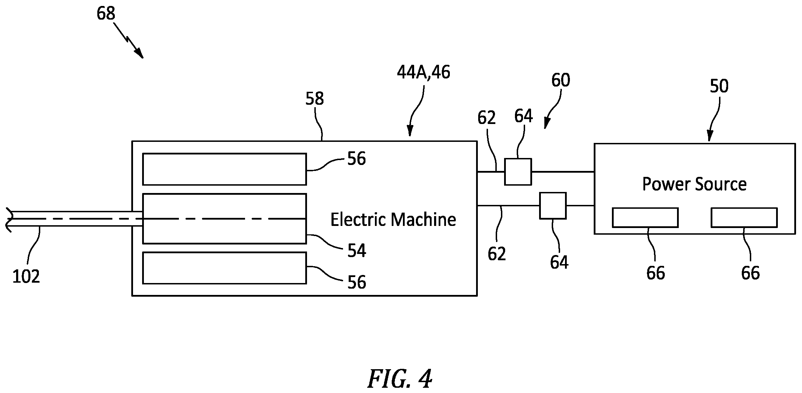

The electric machine 46 of FIG. 4 includes an electric machine rotor 54 and an (e.g., annular) electric machine stator 56. The electric machine 46 also includes an electric machine case 58 that at least partially or completely houses the machine rotor 54 and the machine stator 56.

The machine stator 56 may be radially outboard of and circumscribe the machine rotor 54. Alternatively, the machine rotor 54 may be radially outboard of an circumscribe (or otherwise be positioned relative to) the machine stator 56. The machine rotor 54 is configured to move (e.g., rotate) relative to the machine stator 56. During the motor mode of operation, the machine stator 56 may receive electrical power from the power source 50 and induces an electromagnetic field with the machine rotor 54 that drives rotation of the machine rotor 54. During the generator mode of operation, the machine rotor 54 is rotatably driven (e.g., by the thermal engine 48) and induces an electric electromagnetic field with the machine stator 56 that generates electrical power.

The power source 50 is electrically coupled with the electric machine 46 through electrical circuitry 60. This electrical circuitry 60 may include one or more leads 62 (e.g., high voltage lines) and one or more electrical devices 64 for conditioning, metering, regulating and/or otherwise controlling electrical power transfer between the electric machine 46 and the power source 50. Examples of the electrical devices 64 include, but are not limited to, switches, current regulators, converters and buffers.

The power source 50 is configured to store electricity. The power source 50 is also configured to provide the stored electricity to the electric machine 46 and/or receive electricity from the electric machine 46; e.g., during recharging. The power source 50, for example, may be configured as or otherwise include one or more electricity storage devices 66; e.g., batteries, etc. The power source 50 and its electricity storage device(s) 66 may receive electricity (e.g., be charged by) a fuel cell converter, a thermal engine (e.g., the thermal engine 48 or another thermal engine) and/or any other electrical generator / power source onboard the aircraft 20 (or offboard the aircraft 20 when not in flight).

The electric machine 46, the power source 50 and the electrical circuitry 60 collectively form or may otherwise be included as part of an electrical system 68 for the aircraft propulsion system 24. Each of the aircraft powerplants 38 may include its own dedicated electrical system 68. Alternatively, the aircraft powerplants 38 may share a common electrical system 68. The electrical system 68, for example, may include each electric machine 46 as well as a common power source 50 servicing the multiple electric machines 46 and/or a common electrical circuitry 60 servicing the multiple electric machines 46.

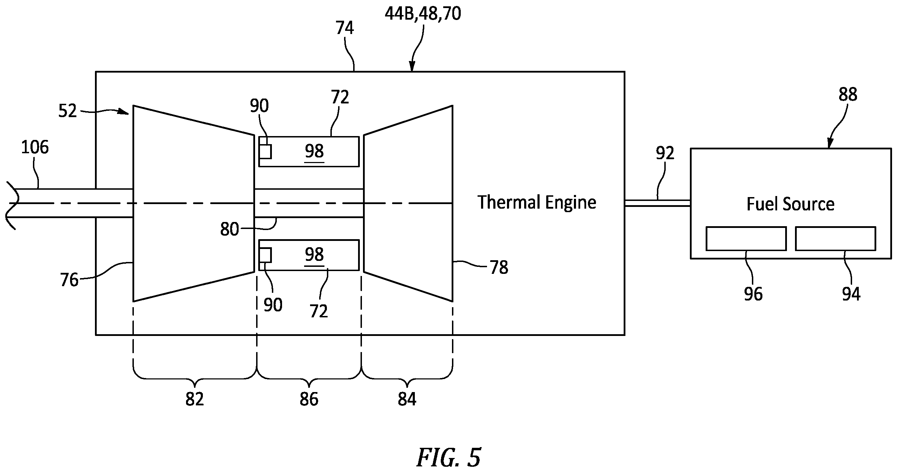

Referring to FIG. 3, the thermal engine 48 is configured to convert chemical energy stored within fuel into mechanical power. The thermal engine 48 of FIG. 5, for example, is configured as or may otherwise include a gas turbine engine 70. The present disclosure, however, is not limited to such an exemplary thermal engine. The thermal engine 48, for example, may alternatively be configured as or otherwise include a reciprocating piston engine, a rotary engine or any other type of internal combustion (IC) engine with an engine rotating structure capable of being monitored and/or capable of driving rotation of the propulsor rotor 36 as described herein. In the case of the reciprocating piston engine, the engine rotating structure 52 may be configured as or otherwise include a crankshaft and one or more pistons coupled to the crankshaft. In the case of the rotary engine, the engine rotating structure 52 may be configured as or otherwise include a driveshaft and an (e.g., triangular) engine rotor (e.g., eccentrically) coupled to the driveshaft. However, for ease of description, the thermal engine 48 may be described or referred to herein as the gas turbine engine 70.

The gas turbine engine 70 of FIG. 5 includes the engine rotating structure 52, a combustor 72 and an engine case 74 housing the engine rotating structure 52 and the combustor 72. The engine rotating structure 52 includes a bladed compressor rotor 76, a bladed turbine rotor 78 and an engine shaft 80 connecting and rotatable with the compressor rotor 76 and the turbine rotor 78. The compressor rotor 76 is arranged in a compressor section 82 of the gas turbine engine 70. The turbine rotor 78 is arranged within a turbine section 84 of the gas turbine engine 70. The combustor 72 is arranged within a combustor section 86 of the gas turbine engine 70. The gas turbine engine 70, however, is not limited to such an exemplary configuration. The gas turbine engine 70, for example, may include multiple of the rotating structures (e.g., spools) such that, for example, the compressor section 82 includes at least a low pressure compressor (LPC) rotor and a high pressure compressor (HPC) rotor and/or the turbine section 84 includes at least a high pressure turbine (HPT) rotor and a low pressure turbine (LPT) rotor. With multi-rotating structures, the engine rotating structure 52 for driving the propulsor rotor 36 (see FIG. 3) may include each of the elements 76, 78 and 80 or may be configured without the compressor rotor 76 where, for example, the turbine rotor 78 is a free turbine rotor / a power turbine rotor. The gas turbine engine 70 may also or alternatively be configured as a direct drive gas turbine engine or a geared gas turbine engine; e.g., where a geartrain couples together one or more engine rotors.

A fuel source 88 is configured to provide the fuel (e.g., jet fuel, diesel, gasoline, etc.) to the gas turbine engine 70 (the thermal engine 48). The fuel source 88 of FIG. 5, for example, is fluidly coupled with one or more fuel injectors 90 of the gas turbine engine 70 through at least (or only) one fuel line 92. The fuel source 88 is also configured to store (e.g., contain a quantity of) the fuel before, during and/or after heat engine operation. The fuel source 88 of FIG. 5, for example, includes a fuel reservoir 94 and a fuel flow regulator 96. The fuel flow regulator 96 may be or otherwise include a pump and/or a valve. This fuel flow regulator 96 is configured to direct fuel received from the fuel reservoir 94 to the fuel injectors 90 through the fuel line 92.

During operation of the gas turbine engine 70 of FIG. 5, air enters a gas path within the gas turbine engine 70 through an airflow inlet. The gas path extends sequentially through the compressor section 82, the combustor section 86 and the turbine section 84. This air is compressed by the compressor rotor 76 and directed into a combustion chamber 98 of the combustor 72. The fuel received by the gas turbine engine 70 from the fuel source 88 is injected into the combustion chamber 98 by the fuel injectors 90 and mixed with the compressed air to provide a fuel-air mixture. This fuel-air mixture is ignited and combustion products thereof flow through and cause the turbine rotor 78 and, thus, the engine rotating structure 52 to rotate. The rotation of the turbine rotor 78 drives rotation of the compressor rotor 76 and, thus, compression of the air received from the airflow inlet. The rotation of the engine rotating structure 52 also provides mechanical power for driving (e.g., rotating) the propulsor rotor 36 of FIG. 3.

The transmission system 40 of FIG. 3 may be configured as or otherwise include a geartrain 100. This geartrain 100 is configured to motively couple / operatively connect the electric machine 46 and the thermal engine 48 to the propulsor rotor 36. An electric machine coupler 102 (e.g., a shaft), for example, rotatably couples the electric machine 46 and its machine rotor 54 to a first component 104 of the geartrain 100; e.g., a gear, a carrier, a shaft, etc. A thermal engine coupler 106 (e.g., a shaft) rotatably couples the thermal engine 48 and its engine rotating structure 52 to a second component 108 of the geartrain 100; e.g., a gear, a carrier, a shaft, etc. The propulsor shaft 42 rotatably couples the propulsor rotor 36 to a third component 110 of the geartrain 100; e.g., a gear, a carrier, a shaft, etc. These geartrain components 104, 108 and 110 are arranged together within a geartrain case 112 such that mechanical power may be transmitted through the transmission system 40, its geartrain 100 and geartrain components 104, 108 and 110, for example: (1) from the electric machine 46 to the propulsor rotor 36; (2) from the thermal engine 48 to the propulsor rotor 36; (3) from the thermal engine 48 to the electric machine 46; and/or (4) from the electric machine 46 to the thermal engine 48.

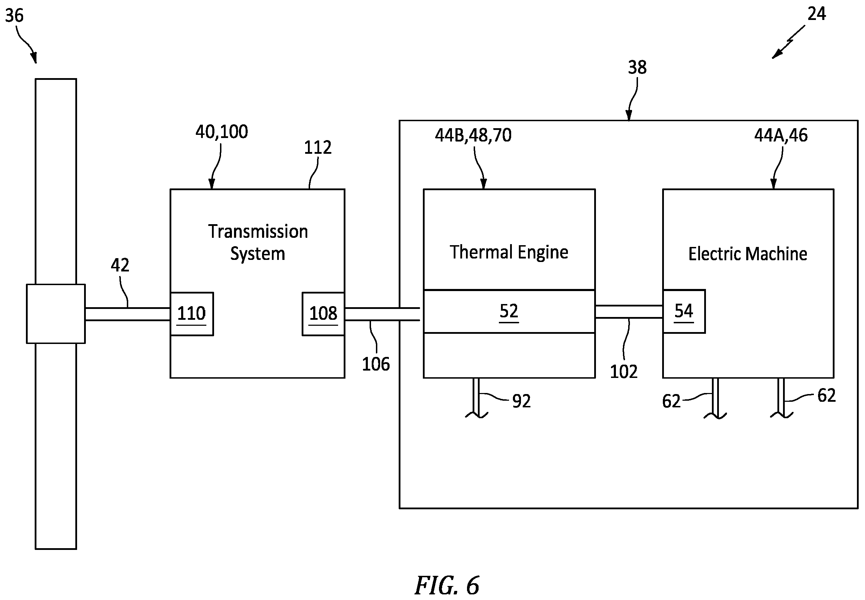

In some embodiments, referring still to FIG. 3, the electric machine 46 and the thermal engine 48 may be configured in parallel to drive the propulsor rotor 36 through the transmission system 40 and its geartrain 100. In other embodiments, referring to FIG. 6, the electric machine 46 and the thermal engine 48 may be configured in series to drive the propulsor rotor 36. The propulsor rotor 36 of FIG. 6, for example, is operably coupled to the electric machine 46 serially through the transmission system 40 / the geartrain 100 and the thermal engine 48. The present disclosure, however, is not limited to such an exemplary arrangement.

During propulsion system operation, the electrical system(s) 68 may produce a constant and/or intermittent electrical system sound; e.g., sound waves. The electrical system sound may include a rotor sound produced by rotation of the machine rotor(s) 54. The electrical system sound may include a field sound produced by the generation of the electromagnetic field between the machine rotor 54 and the machine stator 56 (see FIG. 4). The electrical system sound may include a circuitry sound produced by a flow and/or switching of the flow of electricity through the electrical circuitry 60. The electrical system sound may be a hum, a whir, a whine and/or other noise with a relatively low frequency; e.g., up to one kilohertz (1kHz). Such low frequency sound may be considered unpleasant to and/or may otherwise disturb nearby observers; e.g., humans and/or animals.

The sound attenuation system 26 of the present disclosure is provided and configured to attenuate (e.g., reduce or eliminate) one or more or all of the components of the electrical system sound produced by the electrical system(s) 68. The sound attenuation system 26, for example, may be specifically tailored to attenuate the rotor sound, the field sound, the circuitry sound and/or various other sounds produced by or otherwise resulting from operation of the electrical system 68 and its electric machine 46. Of course, it is contemplated the sound attenuation system 26 may also or alternatively attenuate one or more other (e.g., non-electrical system) sounds; e.g., thermal engine sounds, propulsor rotor sounds, etc. The sound attenuation system 26 of FIG. 3 includes one or more sound sensors 114 (e.g., 114A, 114B and 114C), one or more electroacoustic transducers 116 (e.g., 116A, 116B and 116C) and an attenuation system controller 118.

Referring to FIGS. 1 and 2, the sound sensors 114 are arranged at (e.g., on, adjacent or proximate) an exterior of the aircraft 20. The sound sensors 114, for example, may be arranged at various locations at and along an outer skin 120 of the airframe 22 and its fuselage 28. The upstream, forward sound sensors 114A of FIGS. 1 and 2, in particular, are located with (e.g., on, along, etc.) a forward portion 122A of the airframe 22 and its fuselage 28. The downstream, aft sound sensors 114B are located with an aft portion 122B of the airframe 22 and its fuselage 28. The intermediate sound sensors 114C are located with an intermediate portion 122C of the airframe 22 and its fuselage 28, which intermediate portion 122C is longitudinally between the forward portion 122A and the aft portion 122B.

The sound sensors 114 are configured to sense sound propagating outside of (e.g., and to the sides of) the aircraft 20 and its airframe 22 and the aircraft propulsion system(s) 24. The sound sensors 114 may thereby sense one or more or all of the components of the electrical system sound produced by the electrical system(s) 68. The sound sensors 114 may also sense various other sounds propagating outside of the aircraft 20 such as, but not limited to, the thermal engine sounds, the propulsor rotor sounds, airflow sounds (e.g., wind noise), etc. The sound sensors 114 are further configured to individually or collectively provide one or more sound signals indicative of the sound(s) sensed outside of the aircraft 20. Each sound sensor 114 may be configured as or otherwise include a directional or multi-directional microphone.

The electroacoustic transducers 116 are arranged at the exterior of the aircraft 20. The electroacoustic transducers 116, for example, may be arranged at various locations at and along the outer skin 120 of the airframe 22 and its fuselage 28. The upstream, forward electroacoustic transducers 116A of FIGS. 1 and 2, in particular, are located with the forward portion 122A of the airframe 22 and its fuselage 28. The downstream, aft electroacoustic transducers 116B are located with the aft portion 122B of the airframe 22 and its fuselage 28. The intermediate electroacoustic transducers 116C are located with the intermediate portion 122C of the airframe 22 and its fuselage 28.

The electroacoustic transducers 116 are configured to receive one or more electrical system attenuation signals. The electroacoustic transducers 116 are further configured to produce electrical system attenuation sound based on the electrical system attenuation signal(s); e.g., the electroacoustic transducers 116 may convert the electrical system attenuation signal(s) into the electrical system attenuation sound. The electroacoustic transducers 116 may produce the electrical system attenuation sound outside of (e.g., and vertically below) the aircraft 20 and its airframe 22 and the aircraft propulsion system(s) 24. The electrical system attenuation sound may be specifically tailored to attenuate one or more or all of the components of the electrical system sound produced by the electrical system(s) 68. Of course, the electroacoustic transducers 116 may also or alternatively be configured to produce attenuation sound for attenuating one or more of the other sounds sensed by the sound sensors 114. Each electroacoustic transducer 116 may be configured as or otherwise include a loudspeaker / an audio speaker.

Referring to FIG. 2, each electroacoustic transducer 116 may be arranged to direct the electrical system attenuation sound in a vertical downward direction. Each electroacoustic transducer 116, more particularly, may direct the electrical system attenuation sound in a direction away from the aircraft 20 and its airframe 22 and towards ground 124 beneath the aircraft 20. With such a configuration, the sound attenuation may be directed / focused towards observers outside of and below the aircraft 20. Furthermore, the sound sensors 114 are less likely to sense the electrical system attenuation sound since the electrical system attenuation sound is directed away from the sound sensors 114. The electrical system sound sensed by the sound sensors 114 thereby may not require, or use minimal, filtering to remove any electrical system attenuation sound in the environment outside of the aircraft 20.

The attenuation system controller 118 of FIG. 3 is in signal communication (e.g., hardwired and/or wirelessly connected) with the sound sensors 114 and the electroacoustic transducers 116. The attenuation system controller 118 is configured to receive the sound signal(s) from the sound sensors 114, process the sound signals to generate the electrical system attenuation signal(s), and provide the electrical system attenuation signal(s) to the electroacoustic transducers 116. The attenuation system controller 118 may be implemented with a combination of hardware and software. The hardware may include at least one processing device and a memory, which processing device may include one or more single-core and/or multi-core processors. The hardware may also or alternatively include analog and/or digital circuitry other than that described above.

The memory is configured to store software (e.g., program instructions) for execution by the processing device, which software execution may control and/or facilitate performance of one or more operations such as those described herein. The memory may be a non-transitory computer readable medium. For example, the memory may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

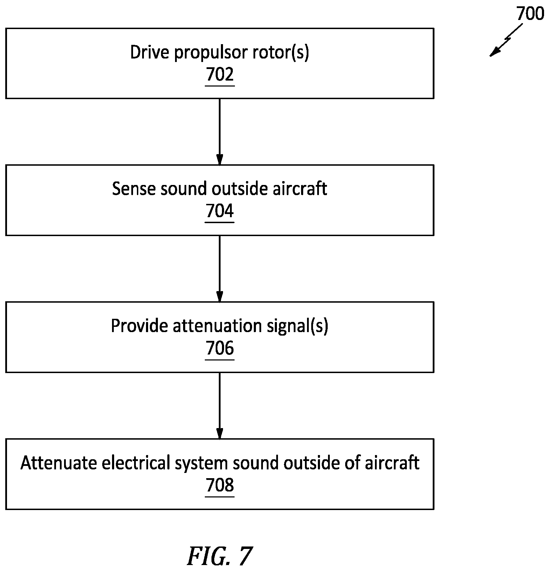

FIG. 7 is a flow diagram of a method 700 for operating an aircraft system. For ease of description, the operating method 700 is described herein with reference to the aircraft system described above. The operating method 700 of the present disclosure, however, is not limited to such an exemplary aircraft system.

In step 702, the aircraft propulsion system(s) 24 are operated to drive rotation of the propulsor rotor(s) 36. During this operating step 702, each electric machine 46 may operate in its motor mode of operation. The electric machine(s) 46 may thereby completely drive rotation of the propulsor rotor(s) 36. Alternatively, the electric machine(s) 46 and the thermal engine(s) 48 may work together to drive rotation of the propulsor rotor(s) 36.

In step 704, one or more of the sound sensors 114 sense sound outside of the aircraft 20. Each of the sound sensors 114, for example, may sense a first (e.g., initial) set of electrical system sound waves produced by the electrical system(s) 68. This first set of the electrical system sound waves may include, but is not limited to: rotor sound waves produced by the rotation of the machine rotor(s) 54; field sound waves produced by the generation of the electromagnetic field; circuitry sound waves produced by the flow and/or switching of the flow of electricity through the electrical circuitry 60. The sound sensors 114 may also sense one or more other sets of sound waves. These other sound waves may include, but are not limited to: sound waves produced by operation of the thermal engine(s) 48; sound waves produced by rotation of the propulsor rotor(s) 36; sound waves produced by the flow of air along and outside of the aircraft 20 (e.g., wind noise); etc. The sound sensors 114 may then provide (e.g., generate) one or more sound signals indicative of the sensed sound waves.

In step 706, the attenuation system controller 118 provides (e.g., generates) one or more electrical system attenuation signals. The attenuation system controller 118, for example, may receive the sound signal(s) from the sound sensors 114. The attenuation system controller 118 may process data from the sound signal(s) to determine (e.g., identify) one or more components of the sensed sound waves indicative of the first set of electrical system sound waves. The attenuation system controller 118 may then use this information to determine an inverse of the first set of electrical system sound waves. The electrical system attenuation signal(s) are indicative of the determined inverse of the first set of electrical system sound waves.

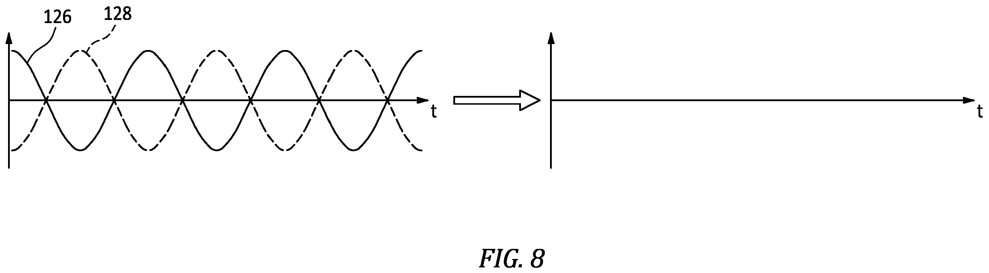

In step 708, one or more of the electroacoustic transducers 116 produce electric system attenuation sound outside of the aircraft 20. The electroacoustic transducers 116, for example, receive the electrical system attenuation signal(s) from the attenuation system controller 118 and produce corresponding electrical system attenuation sound waves outside of the aircraft 20. Referring to FIG. 8, the electrical system attenuation sound waves (e.g., see line 126) may destructively interfere with a second (e.g., subsequent) set of electrical system sound waves (e.g., see line 128) produced by the electrical system(s) 68. The electrical system attenuation sound waves may thereby attenuate the second set of electrical system sound waves. More generally, the attenuation sound produced by the electroacoustic transducers 116 may attenuate at least one or more components of the sound produced by operation of the electrical system(s) 68. Of course, a similar methodology may also or alternatively be used to attenuate any one or more of the other sensed sound waves.

In some embodiments, the sound attenuation system 26 may be operated (e.g., active) / the attenuation step 708 may be performed throughout aircraft operation; e.g., through an aircraft flight and while the aircraft propulsion systems 24 are operational on the ground. In other embodiments, however, the sound attenuation system 26 may be selectively operated (e.g., active) / the attenuation step 708 may be selectively performed. For example, the sound attenuation system 26 may be operated / the attenuation step 708 may be performed based on one or more flight parameters. According to the invention, these flight parameters include, but are not limited to, a power setting of the electric machine. Other examples include a phase of the flight, an altitude of the aircraft above the ground, a geographical location of the aircraft (e.g., relative to high density population areas). For example, where the aircraft 20 is at cruise and relatively high up off the ground, the sound attenuation system 26 may be non-operation. However, where the aircraft 20 is taxiing, taking off, climbing, descending or landing and thus is relatively close to the ground as well as populated areas, the sound attenuation system 26 may be operated / the attenuation step 708 may be performed. In other words, the sound attenuation system 26 may be selectively operated (e.g., active) / the attenuation step 708 may be selectively performed (e.g., only, particularly, etc.) when there is a high (or any) likelihood of benefitting an outside observer.

The attenuation system 26 is generally described above for attenuating sound waves. It should be noted, however, the attenuation 26 may also or alternatively be configured for attenuating, more generally, vibrations and/or energy waves.

While various embodiments of the present invention have been described, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims.

## Claims

1. A method for operating an aircraft system, comprising:
operating an electric machine (46) of an electrical system (68) onboard an aircraft (20), the aircraft (20) including a powerplant (38) comprising the electric machine and a thermal engine (48);
sensing a first set of electrical system waves produced by the electrical system (68);
producing a set of electrical system attenuation waves to attenuate a second set of electrical system waves produced by the electrical system (68) in response to sensing the first set of the electrical system waves; and
selectively operating a sound attenuation system (26) based on one or more flight parameters,
wherein the first set of electrical system waves are sensed by the sound attenuation system (26), and the set of electrical system attenuation waves are produced by the sound attenuation system (26), and
wherein the one or more flight parameters comprises a power setting of the electric machine (46).

2. The method of claim 1, wherein the electrical system waves comprise electrical system sound waves.

3. The method of claim 1 or 2, wherein the first set of electrical system waves and the second set of electrical system waves are produced by the electric machine (46), optionally wherein the first set of electrical system waves and the second set of electrical system waves are further produced by electrical circuitry (60) for operating the electric machine (46).

4. The method of any preceding claim, wherein the first set of electrical system waves and the second set of electrical system waves are produced by an or the electrical circuitry (60) for operating the electric machine (46).

5. The method of any preceding claim, wherein the set of electrical system attenuation waves attenuate the second set of electrical system waves outside of the aircraft (20).

6. The method of any preceding claim, further comprising driving rotation of a propulsor rotor (36) of a propulsion system (24) for the aircraft (20) using the electric machine (46).

7. The method of claim 6, further comprising:
sensing a first set of propulsor waves produced by the propulsor rotor (36); and
producing a set of propulsor attenuation waves to attenuate a second set of propulsor waves produced by the propulsor rotor (36) in response to sensing the first set of the propulsor waves.

8. The method of any preceding claim, wherein the first set of electrical system waves are sensed by one or more sensors (114) at an exterior of the aircraft (20).

9. The method of any preceding claim, wherein the set of electrical system attenuation waves are produced by one or more electroacoustic transducers (116) at an exterior of the aircraft (20), optionally wherein at least a first of the one or more electroacoustic transducers (116) is directed towards ground beneath the aircraft (20).

10. The method of claim 9, wherein the one or more electroacoustic transducers (116) include:
a forward electroacoustic transducer (116) located with a forward portion (112A) of the aircraft (20); and
an aft electroacoustic transducer (116) located with an aft portion (112B) of the aircraft (20), optionally wherein the one or more electroacoustic transducers (116) further include an intermediate electroacoustic transducer (116) located with an intermediate portion (112C) of the aircraft (20) between the forward portion (112A) and the aft portion (112B).

11. The method of any preceding claim, further comprising:
sensing sound at an exterior of the aircraft (20), the sensing of the sound comprising the sensing of the first set of electrical system waves;
processing a sound signal indicative of the sound to determine one or more components of the sound signal indicative of the first set of electrical system waves;
generating an attenuation signal based on the one or more components of the sound signal indicative of the first set of electrical system waves; and
producing the set of electrical system attenuation waves based on the attenuation signal.

12. A system for an aircraft, comprising:
an electrical system (68) comprising an electric machine (46), the electric machine (46) sized to draw at least one megawatt of electrical power from a power source (50); and
a noise attenuation system (26) configured to:
sense a first set of electrical system sound waves produced by the electrical system (68); and
produce a set of electrical system attenuation waves to attenuate a second set of electrical system sound waves produced by the electrical system (68) in response to sensing the first set of the electrical system sound waves and based on a power setting of the electric machine.

13. The system of claim 12, wherein the noise attenuation system (26) includes:
a sensor (114) configured to sense the first set of electrical system sound waves and provide a sound signal indicative of the first set of electrical system sound waves;
a controller configured to generate an attenuation signal based on the first set of electrical system sound waves; and
an electroacoustic transducer (116) configured to produce the set of electrical system attenuation waves in response to receiving the attenuation signal.

14. The system of claim 12 or 13, further comprising an airframe (22), wherein the noise attenuation system (26) is configured to attenuate the second set of electrical system sound waves with the set of electrical system attenuation waves outside of the airframe (22).

15. The system of claim 12, 13, or 14, wherein the noise attenuation system (26) is configured to direct the set of electrical system attenuation waves in a downward direction away from the airframe (22).

## Patentansprüche

1. Verfahren zum Betreiben eines Luftfahrzeugsystems, umfassend:
Betreiben einer elektrischen Maschine (46) eines elektrischen Systems (68) an Bord eines Luftfahrzeugs (20), wobei das Luftfahrzeug (20) ein Triebwerk (38) beinhaltet, das die elektrische Maschine und eine Wärmekraftmaschine (48) umfasst;
Erfassen eines ersten Satzes von Wellen des elektrischen Systems, die von dem elektrischen System (68) erzeugt werden;
Erzeugen eines Satzes von Dämpfungswellen des elektrischen Systems zum Dämpfen eines zweiten Satzes von Wellen des elektrischen Systems, die von dem elektrischen System (68) erzeugt werden, als Reaktion auf Erfassen des ersten Satzes der Wellen des elektrischen Systems; und
selektives Betreiben eines Schalldämpfungssystems (26) basierend auf einem oder mehreren Flugparametern,
wobei der erste Satz von Wellen des elektrischen Systems von dem Schalldämpfungssystem (26) erfasst wird und der Satz von Dämpfungswellen des elektrischen Systems von dem Schalldämpfungssystem (26) erzeugt wird, und
wobei der eine oder die mehreren Flugparameter eine Leistungseinstellung der elektrischen Maschine (46) umfassen.

2. Verfahren nach Anspruch 1, wobei die Wellen des elektrischen Systems Schallwellen des elektrischen Systems umfassen.

3. Verfahren nach Anspruch 1 oder 2, wobei der erste Satz von Wellen des elektrischen Systems und der zweite Satz von Wellen des elektrischen Systems von der elektrischen Maschine (46) erzeugt werden, wobei optional der erste Satz von Wellen des elektrischen Systems und der zweite Satz von Wellen des elektrischen Systems ferner von einer elektrischen Schaltung (60) zum Betreiben der elektrischen Maschine (46) erzeugt werden.

4. Verfahren nach einem der vorhergehenden Ansprüche, wobei der erste Satz von Wellen des elektrischen Systems und der zweite Satz von Wellen des elektrischen Systems von einer oder der elektrischen Schaltung (60) zum Betreiben der elektrischen Maschine (46) erzeugt werden.

5. Verfahren nach einem der vorhergehenden Ansprüche, wobei der Satz von Dämpfungswellen des elektrischen Systems den zweiten Satz von Wellen des elektrischen Systems außerhalb des Luftfahrzeugs (20) dämpfen.

6. Verfahren nach einem der vorhergehenden Ansprüche, ferner umfassend Antreiben einer Drehung eines Antriebsrotors (36) eines Antriebssystems (24) für das Luftfahrzeug (20) unter Verwendung der elektrischen Maschine (46).

7. Verfahren nach Anspruch 6, ferner umfassend:
Erfassen eines ersten Satzes von Wellen des Antriebs, die von dem Antriebsrotor (36) erzeugt werden; und
Erzeugen eines Satzes von Dämpfungswellen des Antriebs zum Dämpfen eines zweiten Satzes von Wellen des Antriebs, die von dem Antriebsrotor (36) erzeugt werden, als Reaktion auf Erfassen des ersten Satzes der Wellen des Antriebs.

8. Verfahren nach einem der vorhergehenden Ansprüche, wobei der erste Satz von Wellen des elektrischen Systems von einem oder mehreren Sensoren (114) an einer Außenseite des Luftfahrzeugs (20) erfasst wird.

9. Verfahren nach einem der vorhergehenden Ansprüche, wobei der Satz von Dämpfungswellen des elektrischen Systems von einem oder mehreren elektroakustischen Wandlern (116) an einer Außenseite des Luftfahrzeugs (20) erzeugt wird, wobei optional mindestens ein erster des einen oder der mehreren elektroakustischen Wandler (116) zum Boden unterhalb des Luftfahrzeugs (20) gerichtet ist.

10. Verfahren nach Anspruch 9, wobei der eine oder die mehreren elektroakustischen Wandler (116) beinhalten:
einen vorderen elektroakustischen Wandler (116), angeordnet mit einem vorderen Abschnitt (112A) des Luftfahrzeugs (20); und
einen hinteren elektroakustischen Wandler (116), angeordnet mit einem hinteren Abschnitt (112B) des Luftfahrzeugs (20), wobei optional der eine oder die mehreren elektroakustischen Wandler (116) ferner einen mittleren elektroakustischen Wandler (116) beinhalten, der mit einem mittleren Abschnitt (112C) des Luftfahrzeugs (20) zwischen dem vorderen Abschnitt (112A) und dem hinteren Abschnitt (112B) angeordnet ist.

11. Verfahren nach einem der vorhergehenden Ansprüche, ferner umfassend:
Erfassen von Schall an einer Außenseite des Luftfahrzeugs (20), wobei das Erfassen des Schalls das Erfassen des ersten Satzes von Wellen des elektrischen Systems umfasst;
Verarbeiten eines Schallsignals, das den Schall anzeigt, zum Bestimmen einer oder mehrerer Komponenten des Schallsignals, die den ersten Satz von Wellen des elektrischen Systems anzeigen;
Generieren eines Dämpfungssignals basierend auf der einen oder den mehreren Komponenten des Schallsignals, die den ersten Satz von Wellen des elektrischen Systems anzeigen; und
Erzeugen des Satzes von Dämpfungswellen des elektrischen Systems basierend auf dem Dämpfungssignal.

12. System für ein Luftfahrzeug, umfassend:
ein elektrisches System (68), das eine elektrische Maschine (46) umfasst, wobei die elektrische Maschine (46) dazu dimensioniert ist, mindestens ein Megawatt elektrischer Leistung von einer Leistungsquelle (50) zu beziehen; und
ein Geräuschdämpfungssystem (26), konfiguriert zum:
Erfassen eines ersten Satzes von Schallwellen des elektrischen Systems, die von dem elektrischen System (68) erzeugt werden; und
Erzeugen eines Satzes von Dämpfungswellen des elektrischen Systems zum Dämpfen eines zweiten Satzes von Schallwellen des elektrischen Systems, die von dem elektrischen System (68) erzeugt werden, als Reaktion auf Erfassen des ersten Satzes der Schallwellen des elektrischen Systems und basierend auf einer Leistungseinstellung der elektrischen Maschine.

13. System nach Anspruch 12, wobei das Geräuschdämpfungssystem (26) beinhaltet:
einen Sensor (114), konfiguriert zum Erfassen des ersten Satzes von Schallwellen des elektrischen Systems und zum Bereitstellen eines Schallsignals, das den ersten Satz von Schallwellen des elektrischen Systems anzeigt;
einen Controller, konfiguriert zum Generieren eines Dämpfungssignals basierend auf dem ersten Satz von Schallwellen des elektrischen Systems; und
einen elektroakustischen Wandler (116), konfiguriert zum Erzeugen des Satzes von Dämpfungswellen des elektrischen Systems als Reaktion auf Empfangen des Dämpfungssignals.

14. System nach Anspruch 12 oder 13, ferner umfassend eine Flugzeugzelle (22), wobei das Geräuschdämpfungssystem (26) konfiguriert ist, den zweiten Satz von Schallwellen des elektrischen Systems mit dem Satz von Dämpfungswellen des elektrischen Systems außerhalb der Flugzeugzelle (22) zu dämpfen.

15. System nach Anspruch 12, 13 oder 14, wobei das Geräuschdämpfungssystem (26) konfiguriert ist, den Satz von Dämpfungswellen des elektrischen Systems in einer Abwärtsrichtung weg von der Flugzeugzelle (22) zu richten.

## Revendications

1. Procédé de fonctionnement d'un système d'aéronef, comprenant :
le fonctionnement d'une machine électrique (46) d'un système électrique (68) à bord d'un aéronef (20), l'aéronef (20) comportant un groupe motopropulseur (38) comprenant la machine électrique et un moteur thermique (48) ;
la détection d'une première série d'ondes de système électrique produites par le système électrique (68) ;
la production d'une série d'ondes d'atténuation de système électrique pour atténuer une seconde série d'ondes de système électrique produites par le système électrique (68) en réponse à la détection de la première série d'ondes de système électrique ; et
le fonctionnement sélectif d'un système d'atténuation sonore (26) sur la base d'un ou de plusieurs paramètres de vol,
dans lequel la première série d'ondes de système électrique est détectée par le système d'atténuation sonore (26), et la série d'ondes d'atténuation de système électrique est produite par le système d'atténuation sonore (26), et
dans lequel les un ou plusieurs paramètres de vol comprennent un réglage de puissance de la machine électrique (46).

2. Procédé selon la revendication 1, dans lequel les ondes de système électrique comprennent des ondes sonores de système électrique.

3. Procédé selon la revendication 1 ou 2, dans lequel la première série d'ondes de système électrique et la seconde série d'ondes de système électrique sont produites par la machine électrique (46), éventuellement dans lequel la première série d'ondes de système électrique et la seconde série d'ondes de système électrique sont en outre produites par un circuit électrique (60) pour faire fonctionner la machine électrique (46).

4. Procédé selon une quelconque revendication précédente, dans lequel la première série d'ondes de système électrique et la seconde série d'ondes de système électrique sont produites par un ou le circuit électrique (60) pour faire fonctionner la machine électrique (46).

5. Procédé selon une quelconque revendication précédente, dans lequel la série d'ondes d'atténuation de système électrique atténue la seconde série d'ondes de système électrique à l'extérieur de l'aéronef (20).

6. Procédé selon une quelconque revendication précédente, comprenant en outre l'entraînement de la rotation d'un rotor de propulsion (36) d'un système de propulsion (24) pour l'aéronef (20) en utilisant la machine électrique (46).

7. Procédé selon la revendication 6, comprenant en outre :
la détection d'une première série d'ondes de propulsion produites par le rotor de propulsion (36) ; et
la production d'une série d'ondes d'atténuation de propulseur pour atténuer une seconde série d'ondes de propulseur produites par le rotor de propulsion (36) en réponse à la détection de la première série des ondes de propulseur.

8. Procédé selon une quelconque revendication précédente, dans lequel la première série d'ondes de système électrique est détectée par un ou plusieurs capteurs (114) à l'extérieur de l'aéronef (20).

9. Procédé selon une quelconque revendication précédente, dans lequel la série d'ondes d'atténuation de système électrique est produite par un ou plusieurs transducteurs électroacoustiques (116) à l'extérieur de l'aéronef (20), éventuellement dans lequel au moins un premier des un ou plusieurs transducteurs électroacoustiques (116) est dirigé vers le sol sous l'aéronef (20).

10. Procédé selon la revendication 9, dans lequel les un ou plusieurs transducteurs électroacoustiques (116) comportent :
un transducteur électroacoustique (116) avant situé au niveau d'une partie avant (112A) de l'aéronef (20) ; et
un transducteur électroacoustique (116) arrière situé au niveau d'une partie arrière (112B) de l'aéronef (20), éventuellement dans lequel les un ou plusieurs transducteurs électroacoustiques (116) comportent en outre un transducteur électroacoustique (116) intermédiaire situé au niveau d'une partie intermédiaire (112C) de l'aéronef (20) entre la partie avant (112A) et la partie arrière (112B).

11. Procédé selon une quelconque revendication précédente, comprenant en outre :
la détection de son à l'extérieur de l'aéronef (20), la détection du son comprenant la détection de la première série d'ondes de système électrique ;
le traitement d'un signal sonore représentatif du son afin de déterminer une ou plusieurs composantes du signal sonore représentant la première série d'ondes de système électrique ;
la génération d'un signal d'atténuation sur la base des une ou plusieurs composantes du signal sonore représentant la première série d'ondes de système électrique ; et
la production de la série d'ondes d'atténuation de système électrique sur la base du signal d'atténuation.

12. Système pour un aéronef, comprenant :
un système électrique (68) comprenant une machine électrique (46), la machine électrique (46) étant dimensionnée pour tirer au moins un mégawatt de puissance électrique d'une source d'alimentation (50) ; et
un système d'atténuation de bruit (26) configuré pour :
détecter une première série d'ondes de système électrique produites par le système électrique (68) ; et
produire une série d'ondes d'atténuation de système électrique pour atténuer une seconde série d'ondes sonores de système électrique produites par le système électrique (68) en réponse à la détection de la première série d'ondes sonores de système électrique et sur la base d'un réglage de puissance de la machine électrique.

13. Système selon la revendication 12, dans lequel le système d'atténuation de bruit (26) comporte :
un capteur (114) configuré pour détecter la première série d'ondes sonores de système électrique et fournir un signal sonore représentant la première série d'ondes sonores de système électrique ;
un dispositif de commande configuré pour générer un signal d'atténuation sur la base de la première série d'ondes sonores de système électrique ; et
un transducteur électroacoustique (116) configuré pour produire la série d'ondes d'atténuation de système électrique en réponse à la réception du signal d'atténuation.

14. Système selon la revendication 12 ou 13, comprenant en outre une cellule (22), dans lequel le système d'atténuation de bruit (26) est configuré pour atténuer la seconde série d'ondes sonores de système électrique avec la série d'ondes d'atténuation de système électrique à l'extérieur de la cellule (22).

15. Système selon la revendication 12, 13 ou 14, dans lequel le système d'atténuation de bruit (26) est configuré pour diriger la série d'ondes d'atténuation de système électrique vers le bas, loin de la cellule (22).
